# EUROPEAN PATENT APPLICATION

(11) **EP 2 011 716 A1**
(43) Date of publication of application: **07.01.2009**
(21) Application number: 08012001.7
(22) Date of filing: 03.07.2008
(51) Int. Cl.: B62B 7/08, B62B 9/12

(54) **Baby carriage and seat hammock**

(30) Priority: 03.07.2007 JP 2007175538
(71) Applicant: GRACO CHILDREN'S PRODUCTS INC., Exton, PA 19341 (US)
(72) Inventor: Kassai, Kenzou, Osaka-shi, Osaka 542-0083 (JP); Ohnishi, Ichiro, Osaka-shi, Osaka 542-0082 (JP)
(74) Representative: Prüfer & Partner GbR European Patent Attorneys

(57) **Abstract**

A baby carriage includes a body (10) and a seat hammock (30). The body (10) includes a pair of seat surface support bars (15) extending in a front-rear direction for supporting a seat surface portion (31) of the seat hammock (30), and a pair of backrest surface support bars (16) extending in an up-down direction for supporting a backrest surface portion (32) of the seat hammock (30). The seat hammock (30) has a front receiving portion (35) at a front end of the seat surface portion (31) for disengageably receiving respective front ends of the pair of seat surface support bars (15), and has a rear receiving portion (36) at an upper end of the backrest surface portion (32) for disengageably receiving respective upper ends of the pair of backrest surface support bars (16). In this baby carriage, the seat hammock (30) that forms a seat can be easily attached to and detached from the body (10).

## Description

### BACKGROUND OF THE INVENTION

### Field of the Invention

The present invention relates to a baby carriage. More particularly, the present invention relates to a baby carriage whose seat hammock that forms a seat is detachably mounted on a baby carriage body.

### Description of the Background Art

The applicant of the present invention disclosed a light-weight baby carriage in Japanese Patent Publication No. H07 (1995)-12824 of examined applications. The baby carriage disclosed in this Publication has a simple structure and has greatly contributed to reduction in weight. In a folding operation of this baby carriage, rear wheels move toward front wheels, and in a folded state, the rear wheels and the front wheels are located approximately at the same height, enabling self-standing of the baby carriage.

A cloth seat hammock that forms a seat is fixedly attached to a baby carriage body. Conventionally, this seat hammock is undetachably mounted on the baby carriage body by using a belt, a screw, or the like. Therefore, for example, when the seat hammock gets soiled, the stains need to be wiped off with the seat hammock attached to the baby carriage body.

If the seat hammock can be detached from the body and washed, it can be always kept clean in use. From the manufacturing standpoint of view, it will improve the manufacturing efficiency if the seat hammock can be easily attached to the baby carriage body.

### SUMMARY OF THE INVENTION

It is an object of the present invention to provide a baby carriage whose seat hammock that forms a seat can be easily attached to and detached from a baby carriage body.

It is another object of the present invention to provide a seat hammock that can be easily attached to and detached from a baby carriage body.

A baby carriage according to the present invention includes: a body having wheels; and a seat hammock including a seat surface portion and a backrest surface portion and detachably mounted on the body to form a seat. The body includes a pair of seat surface support bars extending in a front-rear direction for supporting the seat surface portion of the seat hammock, and a pair of backrest surface support bars extending in an up-down direction for supporting the backrest surface portion of the seat hammock. The seat hammock has a front receiving portion at a front end of the seat surface portion for disengageably receiving respective front ends of the pair of seat surface support bars, and has a rear receiving portion at an upper end of the backrest surface portion for disengageably receiving respective upper ends of the pair of backrest surface support bars.

According to the present invention having the above structure, the seat hammock can be attached to the baby carriage body by simply fitting the respective front ends of the seat support bars in the front receiving portion of the seat hammock and fitting the respective upper ends of the backrest surface support bars in the rear receiving portion of the seat hammock. Moreover, the seat hammock can be detached from the baby carriage body by simply removing the respective front ends of the seat support bars from the front receiving portion of the seat hammock and removing the respective upper ends of the backrest surface support bars from the rear receiving portion of the seat hammock.

In a preferred embodiment, the front receiving portion has a bag shape with its front end closed, and the rear receiving portion has a bag shape with its upper end closed.

Preferably, the seat hammock includes connecting means for detachably connecting a boundary portion between the seat surface portion and the backrest surface portion to the body. More preferably, the seat hammock includes a hanging cloth that hangs downward from the front end of the seat surface portion.

A seat hammock according to the invention includes a seat surface portion and a backrest surface portion and is detachably mounted on a body of a baby carriage to form a seat. The seat hammock includes: a front receiving portion formed at a front end of the seat surface portion for disengageably receiving a seat surface support bar of the body; and a rear receiving portion formed at an upper end of the backrest surface portion for disengageably receiving a backrest surface support bar of the body.

### BRIEF DESCRIPTION OF THE DRAWINGS

Fig. 1 is a perspective view showing a body of a baby carriage according to an embodiment of the present invention;
Fig. 2 is a side view showing a body of a baby carriage according to an embodiment of the present invention;
Fig. 3 is a perspective view of a baby carriage according to an embodiment of the present invention; and
Fig. 4 is a side view of a baby carriage according to an embodiment of the present invention.

### DESCRIPTION OF THE PREFERRED EMBODIMENTS

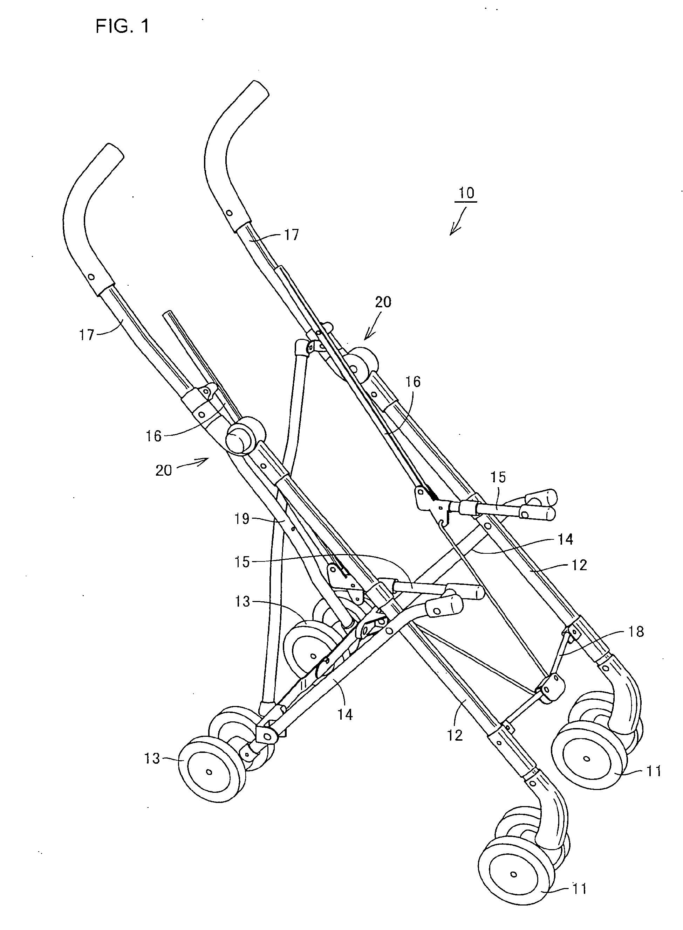

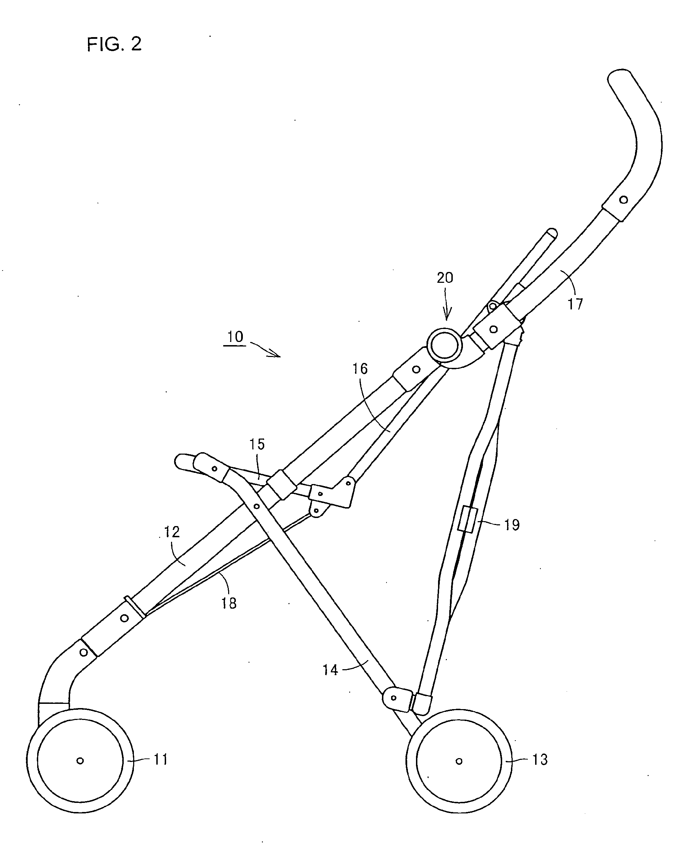

A baby carriage includes a body and a seat hammock. The body has wheels, and the seat hammock includes a seat surface portion and a backrest surface portion and is detachably mounted on the body to form a seat. In a baby carriage body 10 shown in Figs. 1 and 2, rear wheels 13 move toward front wheels 11 in a folding operation, and in a folded state, the rear wheels 13 and the front wheels 11 are located approximately at the same height, enabling self-standing of the baby carriage body 10.

The baby carriage 10 includes, as a basic structure, a pair of front legs 12, a pair of rear legs 14, a pair of seat surface support bars 15, a pair of backrest surface support bars 16, a pair of push bars 17, width-direction connecting means 18, 19, and opened/closed state lock means 20. The front legs 12 extend in an up-down direction and have the front wheels 11 at their respective lower parts. The rear legs 54 extend in the up-down direction and have the rear wheels 13 at their respective lower parts. The rear legs 14 are provided so as to cross the front legs 12, and are pivotally connected to the front legs 12 at their crossing portions through pins, respectively. The seat surface support bars 15 extend in a front-back direction, and front parts of the seat surface support bars 15 are pivotally connected to upper parts of the rear legs 14, respectively. The backrest surface support bars 16 extend in the up-down direction, and lower parts of the backrest surface support bars 16 are pivotally connected to rear parts of the seat surface support bars 15, respectively. The push bars 17 extend in the up-down direction and respectively cross the backrest surface support bars 16. Lower ends of the push bars 17 are pivotally connected to upper ends of the front legs 12 through pivot shafts, respectively. The push bars 17 are pivotally connected to the backrest surface support bars 16 at their crossing portions, respectively. The width-direction connecting means 18, 19 connects the left and right sides of the baby carriage, each of the left and right sides being formed by the front leg 12, the rear leg 14, the seat surface support bar 15, the backrest surface support bar 16, and the push bar 17. The opened/closed state lock means 20 locks an opened state and closed state (folded state) of the baby carriage body 10 by inhibiting pivoting of the push bars 17 with respect to the front legs 12.

The width-direction connecting means 18, 19 are structured so as to reduce the gap between the right and left sides of the baby carriage body in the folded state of the baby carriage.

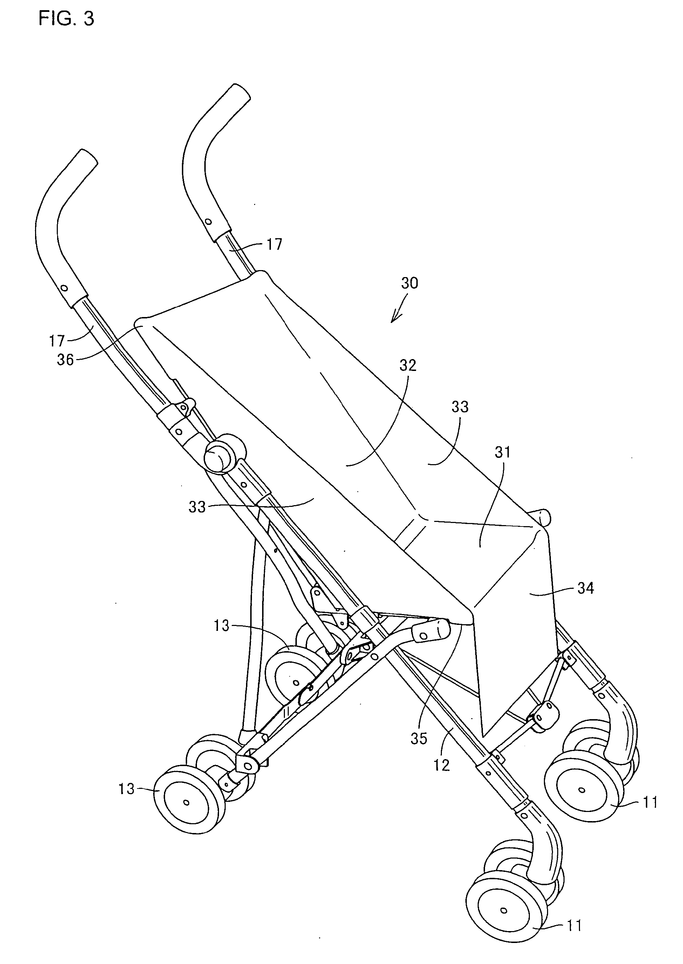

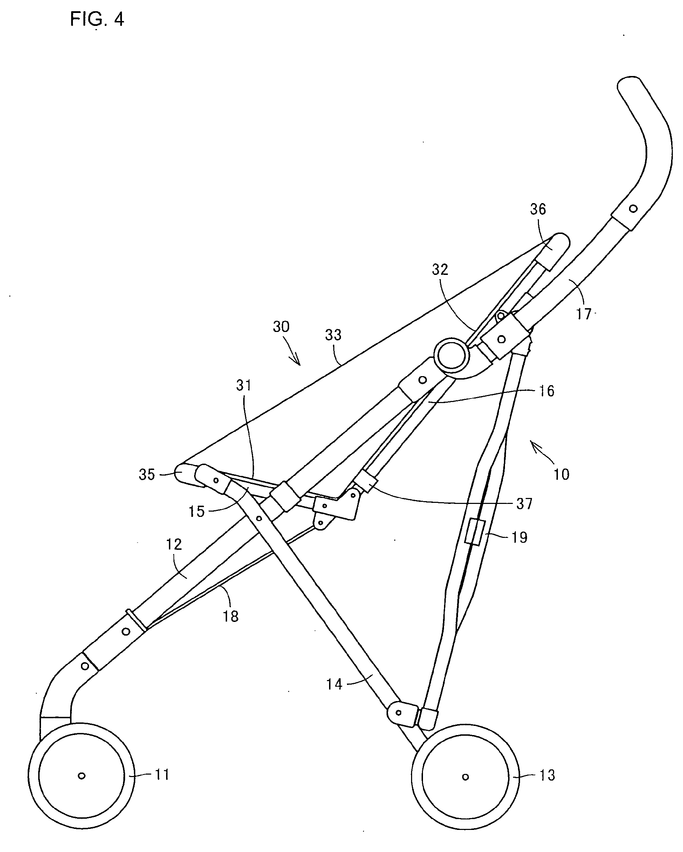

The seat hammock that forms a seat is not shown in Figs. 1 and 2. However, an embodiment of the present invention is characterized in that a seat hammock 30 (see Figs. 3 and 4) can be easily attached to and detached from the baby carriage body 10.

As shown in Figs. 3 and 4, the seat hammock 30 is made of, for example, cloth, and includes a seat surface portion 31, a backrest surface portion 32, left and right side portions 33, and a hanging cloth 34. The backrest surface portion 32 extends upward from a rear edge of the seat surface portion 31. The left and right side portions 33 form left and right side walls of the seat, respectively. The hanging cloth 34 hangs downward from a front edge of the seat surface portion 31. The hanging cloth 34 is not shown in Fig. 4.

As can be seen from Fig. 4, the seat surface portion 31 of the seat hammock 30 has a front receiving portion 35, and the backrest surface portion 32 of the seat hammock 30 has a rear receiving portion 36. The front receiving portion 35 is provided on a rear surface of a front end of the seat surface portion 31 and disengageably receives front ends of the seat surface support bars 15. The rear receiving portion 36 is provided on a rear surface of an upper end of the backrest surface portion 32 and disengageably receives upper ends of the backrest surface support bars 16.

The front receiving portion 35 and the rear receiving portion 36 may be in any form as long as they can disengageably receive the front ends of the seat surface support bars 15 and the upper ends of the backrest surface support bars 16, respectively. In the illustrated embodiment, the front receiving portion 35 and the rear receiving portion 36 have, as a simpler structure, a bag shape having their respective ends (front end or upper end) closed. In this case, the seat hammock 30 can be attached to the baby carriage body 10 by simply fitting the bag-like front receiving portion 35 and rear receiving portion 36 onto the ends of the seat surface support bars 15 and backrest surface support bars 16, respectively. Moreover, the seat hammock 30 can be easily detached from the baby carriage body 10 by removing the front receiving portion 35 and the rear receiving portion 36 from the ends of the seat surface support bars 15 and the backrest surface support bars 16, respectively.

By using the bag-like front receiving portion 35 and rear receiving portion 36, an engaged state of the front receiving portion 35 and the seat surface support bars 15 and an engaged state of the rear receiving portion 36 and the backrest support bars 16 can be reliably maintained by the weight of an infant or small child when the infant or small child sits on the seat hammock 30.

In order to prevent the boundary portion between the seat surface portion 31 and the backrest surface portion 32 of the seat hammock 10 from getting away from the baby carriage body 10, the seat hammock 30 of the illustrated embodiment includes connecting means 37 for detachably connecting the boundary portion to the baby carriage body 10. For example, a string, a hook and loop fastener, or the like can be used as the connecting means 37.

The hanging cloth 34 has a function to make the space under the seat invisible from the front, and a function to prevent the legs of an infant or small child from contacting the body components located in the space under the seat. The former function is effective, for example, when a baggage basket is mounted under the seat, and the latter function works more efficiently in the case where the hanging cloth 34 is connected to the body 10 by any connecting means.

In a preferred embodiment, the seat surface portion 31 of the seat hammock 30 has a pair of front receiving portions 35 located apart from each other on the left and right sides. When the pair of front receiving portions 35 individually receive the pair of seat surface support bars 15, respectively, the width-direction dimension of the seat surface portion 31 is fixed, whereby the shape can be stably maintained. Similarly, the backrest surface portion 32 of the seat hammock 30 preferably has a pair of rear receiving portions 36 located apart from each other on the left and right sides. When the pair of rear receiving portions 36 individually receive the pair of backrest surface support bars 16, respectively, the width-direction dimension of the backrest surface portion 32 is fixed, whereby the shape can be stably maintained.

Although an embodiment of the present invention has been described above with reference to the figures, the present invention is not limited to the illustrated embodiment. Various modifications and variations can be made to the above described and illustrated embodiment within the same scope or an equivalent scope as in the present invention.

The present invention can thus be advantageously used in a baby carriage having a baby carriage body and a seat hammock.

## Claims

1. A baby carriage, comprising: a body (10) having wheels; and a seat hammock (30) including a seat surface portion (31) and a backrest surface portion (32) and detachably mounted on said body to form a seat, wherein
said body (10) includes a pair of seat surface support bars (15) extending in a front-rear direction for supporting the seat surface portion of said seat hammock (30), and a pair of backrest surface support bars (16) extending in an up-down direction for supporting the backrest surface portion of said seat hammock (30), and
said seat hammock (30) has a front receiving portion (35) at a front end of the seat surface portion (31) for disengageably receiving respective front ends of said pair of seat surface support bars (15), and has a rear receiving portion (36) at an upper end of the backrest surface portion (32) for disengageably receiving respective upper ends of said pair of backrest surface support bars (16).

2. The baby carriage according to claim 1, wherein said front receiving portion (35) has a bag shape with its front end closed.

3. The baby carriage according to claim 1 or 2, wherein said rear receiving portion (36) has a bag shape with its upper end closed.

4. The baby carriage according to any of claims 1 to 3, wherein said seat hammock (30) includes connecting means (37) for detachably connecting a boundary portion between the seat surface portion and the backrest surface portion to said body.

5. The baby carriage according to any of claims 1 to 4, wherein said seat hammock (30) includes a hanging cloth (34) that hangs downward from the front end of said seat surface portion (31).

6. A seat hammock (30) including a seat surface portion (31) and a backrest surface portion (32) and detachably mounted on a body of a baby carriage to form a seat, comprising:
a front receiving portion (35) formed at a front end of said seat surface portion (31) for disengageably receiving a seat surface support bar (15) of the body; and
a rear receiving portion (36) formed at an upper end of said backrest surface portion (32) for disengageably receiving a backrest surface support bar (16) of the body.
